# EUROPEAN PATENT APPLICATION

(11) **EP 4 332 190 A1**
(43) Date of publication of application: **06.03.2024**
(21) Application number: 22193899.6
(22) Date of filing: 05.09.2022
(51) Int. Cl.: C09J 9/02, C09J 133/04

(54) **DEBONDABLE SOLVENT-BORNE PRESSURE SENSITIVE ADHESIVE (PSA)**

(71) Applicant: Henkel AG & Co. KGaA, 40589 Düsseldorf (DE)
(72) Inventor: Stapf, Stefanie, 45239 Essen (DE); Schneider, Anja, 40547 Düsseldorf (DE); Lieske, Benjamin, 40597 Düsseldorf (DE); Sundermeier, Uta, 42799 Leichlingen (DE)

(57) **Abstract**

The present invention relates to a debondable solvent-borne pressure sensitive adhesive composition comprising a) a (meth)acrylate co-polymer formed from the monomers selected from the group consisting of ethyl (meth)acrylate, methyl acrylate, butyl (meth)acrylate, 2-ethylhexyl (meth)acrylate, 3-epoxypropyl (meth)acrylate, 2-hydroxyethyl (meth)acrylate, hydrogenated polybutadiene(meth)acrylate, glacial acrylic acid, vinyl acetate, and mixtures thereof; b) an electrolyte selected from the group consisting of 1-butyl-3-methylimidazolium bis(trifluoromethylsolfonyl)imide, 1-ethyl-3-vinylimidazolium methanesulfonate, 1-dodecyl-3-methylimidazolium bis(trifluoromethylsulfonyl)imide, tributyl(ethyl) phosphonium diethyl phosphate, trihexyltetradecylphosphonium bis(trifluoromethylsulfonyl)amide and mixtures thereof; c) a crosslinker; and d) a solvent.

## Description

### Technical field of the invention

The present invention is directed to a solvent-borne pressure sensitive adhesive composition which can be debonded from particular substrates to which it is applied. The present invention relates to a debondable solvent-borne pressure sensitive adhesive composition comprising a) a (meth)acrylate co-polymer; b) an electrolyte; c) a cross-linker; and d) a solvent.

### Background of the invention

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and/or high temperature might be effective but can be time consuming and complex to perform. Moreover, the aggressive chemicals and/or harsh conditions required can damage the substrates being separated, rendering them unsuitable for subsequent applications.

Noting these problems, certain authors have sought to develop electrochemically debondable adhesive compositions, wherein the passage of an electrical current through the dried or cured compositions acts to disrupt the bonding at the interface of the adhesive and the substrate.

WO2007/142600 describes an electrochemically weakened adhesive composition which provides an adhesive bond to an electrically conducting surface and sufficient ion conductive properties to enable a weakening of said adhesive bond at the application of a voltage across the adhesive composition, wherein said composition comprises at least one ionic compound in an effective amount to give said ion conductive properties and wherein said ionic compound has a melting point of no more than 120°C.

US 2007/0269659 describes an adhesive composition disbondable at two interfaces, the composition: (i) comprising a polymer and an electrolyte; (ii) facilitating joinder of two surfaces; and, (iii) in response to a voltage applied across both surfaces so as to form an anodic interface and a cathodic interface, disbonding from both the anodic and cathodic surfaces.

US 2008/0196828 describes a hot-melt adhesive composition comprising: a thermoplastic component; and, an electrolyte, wherein the electrolyte provides sufficient ionic conductivity to the composition to enable a faradaic reaction at a bond formed between the composition and an electrically conductive surface and to allow the composition to disbond from the surface.

US Patent No. 7,465,492 describes an electrochemically disbondable composition comprising: a matrix functionality comprising a monomer selected from the group consisting of acrylics, methacrylics and combinations thereof; a free radical initiator; and, an electrolyte, wherein the electrolyte provides sufficient ionic conductivity to said composition to support a faradaic reaction at a bond formed between the composition and an electrically conductive surface and thus allows the composition to disbond from the surface. In this citation, the electrolyte comprises a salt which is capable of being solvated into the composition and which is a member of the group consisting of the ammonium (NH₄⁺), alkali metal, alkali earth or rare earth salts of perchlorate, tetrafluoroborate, hexafluorophosphate, triflate and triflimide anions.

EP 3363875 provides an electrically peelable adhesive composition that forms an adhesive layer which has high adhesion and can be easily peeled off upon application of a voltage for a short time. The electrically peelable adhesive composition of the invention includes a polymer and from 0.5 to 30 wt.%, based on the weight of the polymer, of an ionic liquid, wherein the anion of the ionic liquid is a bis(fluorosulfonyl)imide anion.

WO2017/133864 describes a method for reversibly bonding a first and a second substrate, wherein at least the first substrate is an electrically non-conductive substrate, the method comprising: a) coating the surface of the electrically non-conductive substrate(s) with a conductive ink; b) applying an electrically debondable hot melt adhesive composition to the conductive ink-coated surface of the first substrate and / or the second substrate; c) contacting the first and the second substrates such that the electrically debondable hot melt adhesive composition is interposed between the two substrates; d) allowing formation of an adhesive bond between the two substrates to provide bonded substrates; and, e) applying a voltage to the bonded substrates whereby adhesion at an interface between the electrically debondable hot melt adhesive composition and a substrate surface is substantially weakened.

Therefore, there is a need for a debondable solvent-borne pressure sensitive adhesive to provide high stability and high adhesion strength on metal and glass substrates, while enabling effective and clean debonding upon application of a voltage.

### Summary of the invention

The present invention relates to a debondable solvent-borne pressure sensitive adhesive composition comprising a) a (meth)acrylate co-polymer formed from the monomers selected from the group consisting of ethyl (meth)acrylate, methyl acrylate, 2-ethylhexyl (meth)acrylate, 3-epoxypropyl (meth)acrylate, 2-hydroxyethyl (meth)acrylate, hydrogenated polybutadiene(meth)acrylate, glacial acrylic acid, vinyl acetate, and mixtures thereof; b) an electrolyte selected from the group consisting of 1-butyl-3-methylimidazolium bis(trifluoromethylsulfonyl)imide, 1-ethyl-3-vinylimidazolium methanesulfonate, 1-dodecyl-3-methylimidazolium bis(trifluoromethylsulfonyl)imide, tributyl(ethyl) phosphonium diethyl phosphate, trihexyltetradecylphosphonium bis(trifluoromethylsulfonyl)amide and mixtures thereof; c) a cross-linker; and d) a solvent.

The present invention also relates to a dry film formed from the debondable solvent-borne pressure sensitive adhesive composition according to the present invention.

The present invention encompasses use of the debondable solvent-borne pressure sensitive adhesive composition or the dry film according to the present invention in electronic devices.

The present invention further encompasses a bonded structure comprising a) a first substrate having an electrically conductive surface; and b) a second substrate having an electrically conductive surface; wherein the debondable pressure sensitive adhesive or a dry film according to the present invention is disposed between the electrically conductive surfaces of the first and second substrates.

Further, the present invention relates to a method of debonding the bonded structure according to the present invention, said method comprising the steps of: 1) applying a voltage across both surfaces to form an anodic interface and a cathodic interface, preferably voltage of from 0.5 to 200V is applied for from 1 second to 60 minutes; and 2) debonding the surfaces.

### Short description of the figures

Figure 1 illustrates the bonded structure.
Figure 2 illustrates the debonded structure.
Figure 3 illustrates the bonded structure.
Figure 4 illustrates the debonded structure.
Figure 5 illustrates needed force to pull apart the aluminium foils adhered together with compositions according to example 1 and comparative example 4.
Figure 6 illustrates needed force to pull apart the aluminium foils adhered together with compositions according to example 2 and comparative example 5.
Figure 7 illustrates needed force to pull apart the aluminium foils adhered together with compositions according to example 3 and comparative example 6.
Figure 8 illustrates needed force to pull apart the aluminium foils adhered together with composition according to example 7.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements, or method steps. If used, the phrase "*consisting of*" is closed and excludes all additional elements. Further, the phrase "*consisting essentially of*' excludes additional material elements but allows the inclusion of non-material elements that do not substantially change the nature of the invention.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

The terms "*preferred*", "*preferably*", "*desirably*", "*particularly*", "*in particular*" and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "*may*" is used in a permissive sense - that is meaning to have the potential to - rather than in the mandatory sense.

As used herein the term "*electrochemically debondable*" means that, after curing of the pressure sensitive adhesive, the bond strength can be weakened by at least 50% upon application of an electrical potential of 30 V for a duration of 30 minutes. The pressure sensitive adhesive is applied between two aluminium foils which are bonded by said adhesive so that an electric current is running through the adhesive bond line. Bond strength is measured by peel adhesion test (180°) according to FTM-1 in FINAT Technical Handbook 9th Edition with slight modifications, mainly the speed of 200 mm/min, the adhesive thickness being 30 µm and sample width 25mm.

As used herein, the term "*clean debonding*" refers to that after the debonding, the solvent-borne pressure sensitive adhesive composition is solely on a first substrate or a second substrate, meaning that one of the substrates is substantially free of adhesive. By the term "substantially free of adhesive" is meant herein that there is 5% or less of the adhesive left in the substrate after debonding, wherein the inspection/evaluation is done visually, preferably less than 3% and more preferably less than 1%.

As used herein, the term "*monomer*" refers to a substance that can undergo a polymerization reaction to contribute constitutional units to the chemical structure of a polymer. The term "*monofunctional*', as used herein, refers to the possession of one polymerizable moiety. The term "*polyfunctional*", as used herein, refers to the possession of more than one polymerizable moiety.

As used herein, "*(meth)acryl*" is a shorthand term referring to "*acryl*" and/or "*methacryl*". Thus, the term "*(meth)acrylamide*" refers collectively to acrylamide and methacrylamide.

The term "pressure sensitive adhesive" or "PSA" is meant herein a type of adhesive which forms a bond when pressure is applied to bond the adhesive with a surface.

All references cited in the present specification are hereby incorporated by reference in their entirety.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to a debondable solvent-borne pressure sensitive adhesive composition comprising a) a (meth)acrylate co-polymer formed from the monomers selected from the group consisting of ethyl (meth)acrylate, methyl acrylate, butyl (meth)acrylate, 2-ethylhexyl (meth)acrylate, 3-epoxypropyl (meth)acrylate, 2-hydroxyethyl (meth)acrylate, hydrogenated polybutadiene (meth)acrylate, glacial acrylic acid, vinyl acetate, and mixtures thereof; b) an electrolyte selected from the group consisting of 1-butyl-3-methylimidazolium bis(trifluoromethylsolfonyl)imide, 1-ethyl-3-vinylimidazolium methanesulfonate, 1-dodecyl-3-methylimidazolium bis(trifluoromethylsulfonyl) imide, tributyl(ethyl) phosphonium diethyl phosphate, trihexyltetradecylphosphonium bis(trifluoromethylsulfonyl)amide and mixtures thereof; c) a cross-linker; and d) a solvent.

The debondable solvent-borne pressure sensitive adhesive composition according to the present invention provides high stability and high adhesion strength on metal, especially steel, and glass substrates, while enabling effective and clean debonding upon application of a voltage.

The debondable solvent-borne pressure sensitive adhesive composition according to the present invention comprises a (meth)acrylate co-polymer. The (meth)acrylate co-polymer is formed from the monomers selected from the group consisting of ethyl (meth)acrylate, methyl acrylate, butyl (meth)acrylate, 2-ethylhexyl (meth)acrylate, 3-epoxypropyl (meth)acrylate, 2-hydroxyethyl (meth)acrylate, hydrogenated polybutadiene (meth)acrylate, glacial acrylic acid, vinyl acetate, and mixtures thereof.

These monomers are preferred because combinations of them provide good adhesion strength on metal and glass substrates with good bond strength.

In one embodiment, the (meth)acrylate co-polymer is formed from three or more monomers selected from the group consisting of ethyl (meth)acrylate, methyl acrylate, butyl (meth)acrylate, 2-ethylhexyl (meth)acrylate, 3-epoxypropyl (meth)acrylate, 2-hydroxyethyl (meth)acrylate, hydrogenated polybutadiene (meth)acrylate, glacial acrylic acid, vinyl acetate, and mixtures thereof.

In another embodiment, the (meth)acrylate co-polymer is formed from four or more monomers selected from the group consisting of ethyl (meth)acrylate, methyl acrylate, butyl (meth)acrylate, 2-ethylhexyl (meth)acrylate, 3-epoxypropyl (meth)acrylate, 2-hydroxyethyl (meth)acrylate, hydrogenated polybutadiene (meth)acrylate, glacial acrylic acid, vinyl acetate, and mixtures thereof.

The use of three or more or four or more different monomers with different Tg and/or functionalities enables finetuning of the adhesion strength and bond strength properties of the final (meth)acrylate co-polymer.

Suitable commercially available (meth)acrylate monomers for use in the present invention include but are not limited to ethyl acrylate and 2-ethylhexylacrylate from BASF, and 3-epoxypropylmethacrylate from ARPADIS.

The (meth)acrylate co-polymer may be present in a debondable solvent-borne pressure sensitive adhesive composition according to the present invention in an amount of from 23 to 55% based on the total weight of the composition, preferably from 25 to 40%, and more preferably from 26 to 39%.

Lower (meth)acrylate co-polymer quantity may lead to poor bonding properties and is not beneficial to film forming properties, whereas too high quantity may lead to a poor processability.

The (meth)acrylate copolymer may be obtained by any known polymerization method, of which mention may be made of: solution polymerization in the presence of an organic solvent which can dissolve the obtained copolymer; suspension polymerization; bulk polymerization; emulsion polymerization; and, mini-emulsion polymerization. It is preferred herein to use solution polymerization from the standpoints of yield or productivity and the resultant performance of a coating film derived from the copolymer. In any of these methods, the polymerization temperature will usually be in the range from 30°C to 120°C: that temperature does not have to be held constant but may, for example, be raised during the polymerization.

The polymerization will conventionally be conducted using a free radical initiator, typically in an amount between 0.05 and 5 wt.% based on the total weight of monomers used. Suitable free radical initiators include: hydrogen peroxide; alkyl hydroperoxides, such as t-butylhydroperoxide and cumene hydroperoxide; persulphates, such as NH₄-persulphate, K-persulphate and Na-persulphate; organic peroxides, such as acyl peroxides and including benzoyl peroxide; dialkyl peroxides, such as di-t-butyl peroxide; peroxy esters, such as t-butyl perbenzoate; and, azo-functional initiators, such as azo-bis(isobutyronitrile) (AIBN), 2,2'-azo-bis(2-methyl butane nitrile) (AMBN) and 4,4'-azobis(4-cyanovaleric acid).

The aforementioned peroxy initiator compounds may in some cases be advantageously used in combination with suitable reductors to form a redox system. As suitable reductors, there may be mentioned: sodium pyrosulphite; potassium pyrosulphite; sodium bisulphite; potassium bisulphate; acetone bisulfite; hydroxymethane sulfinic acid; and isoascorbic acid. Metal compounds such as Fe.EDTA may also be usefully employed as part of the redox initiator system.

The person of skill in the art will be able to select an appropriate regimen for the addition of the initiator to the polymerization vessel in the course of the polymerization. It can be introduced both completely into the polymerization vessel or used continuously or in stages according to its consumption in the course of the free radical polymerization. Preferably, a part is initially charged and the remainder supplied according to the consumption of the polymerization.

A chain transfer agent may also be present in the polymerization mixture, typically in an amount of from 0.01 to 1 wt.%, based on the total weight of monomers used. Exemplary chain transfer agents: mercaptans, such as n-dodecyl mercaptan; thioglycolic acid esters such as octyl thioglycolate; α-methylstyrene dimer; and terpinolene.

The debondable solvent-borne pressure sensitive adhesive composition according to the present invention comprises an electrolyte. The electrolyte comprises or consists of at least one salt in accordance with Formula (I) or Formula (II): 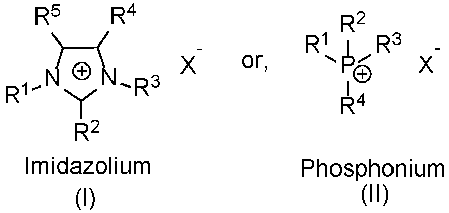 wherein: R¹, R², R³, R⁴ and R⁵ are independently selected from hydrogen, C₁-C₁₈ alkyl, C₃-C₁₈ cycloalkyl, C₆-C₁₈ aryl, C₇-C₂₄ aralkyl, C₂-C₂₀ alkenyl, -C(O)R^{q}, -C(O)OH, -CN or -NO₂;
R^{q} is C₁-C₆ alkyl; and,
X⁻ is a counter anion.

The electrolyte is selected from the group consisting of 1-butyl-3-methylimidazolium bis(trifluoromethylsulfonyl)imide, 1-ethyl-3-vinylimidazolium methanesulfonate, 1-dodecyl-3-methylimidazolium bis(trifluoromethylsulfonyl) imide, tributyl(ethyl) phosphonium diethyl phosphate, trihexyltetradecylphosphonium bis(trifluoromethylsulfonyl)amide and mixtures thereof. Above mentioned electrodes are preferred because they have good solubility to the (meth)acrylate co-polymer.

Suitable commercially available electrolytes for use in the present invention include but are not limited to 1-butyl-3-methylimidazolium bis(trifluoromethylsulfonyl)imide (BMIM NTF) from Sigma Aldrich, Cyphos IL 109 and Cyphos IL 169 from Solvay and 1-dodecyl-3-methylimidazolium bis(trifluoromethylsulfonyl)imide from lolitec.

The electrolyte may be present in a debondable solvent-borne pressure sensitive adhesive composition according to the present invention in an amount of from 0.1 to 12 % based on the total weight of the composition, preferably from 0.4 to 11%, more preferably from 0.5 to 11%, and even more preferably from 0.75 to 10.75%.

These electrolyte quantities are preferred because quantity greater than 12% may lead to good debonding effect, however, the cure may be incomplete, and therefore, initial adhesive properties may be adversely affected, whereas low quantities, mainly below 0.1%, may lead to a lack of debonding effect.

The debondable solvent-borne pressure sensitive adhesive composition according to the present invention comprises a cross linker. Preferably the cross linker is a metal chelate cross-linking agent. The suitable crosslinker for use in the present invention should be stable at temperatures from -20°C up to 100°C.

The suitable cross linker for use in the present invention is preferably i) a complex of a metal selected from the group consisting of Al, Ti, Fe, Co, Ba, Zr, K and Zn; and ii) 1,3-dicarbonyl ligand providing organic compound.

The metal is selected from the group consisting of Al, Ti, Fe, Co, Ba, Zr, K and Zn, preferably the metal is Al or Ti. As used herein, a 1,3-dicarbonyl-ligand providing organic compound is a compound able to take part in chelation with a metal and which has at least two carbonyl groups arranged in a 1,3 spatial arrangement with reference to the carbon atoms to which they are bonded.

An exemplary metal chelates of this type include but are not limited to metal beta β-keto esters, such as metal acetoacetate esters including metal ethyl acetoacetates (ligand: ethyl acetoacetate); metal malonate esters, such as metal diethyl malonates; metal acetylacetonates (ligand: acetylacetone); metal formylacetonates (ligand: formylacetone); and, metal formylacetophenonates (ligand: formylacetophenone).

Preferably the cross linker is selected from the group consisting of aluminium tris-2,4-pentanedionate, titanium diisopropoxide bis(acetylacetonate), and mixtures thereof.

These cross linkers are preferred because they have positive impact on the final cohesion of the composition before voltage is applied.

Suitable commercially available cross linkers for use in the present invention include but are not limited to aluminium tris-2,4-pentanedionate and titanium diisopropoxide bis(acetylacetonate) from Siccanor.

The cross linker may be present in a debondable solvent-borne pressure sensitive adhesive composition according to the present invention in an amount of from 0.01 to 1.0% based on the total weight of the composition, preferably from 0.02 to 0.75%, and more preferably from 0.03 to 0.65%.

The quantity of the crosslinker has influence on adhesion and cohesion of the composition. When the quantity of the cross linker is low, the PSA may be too soft and not able to hold both substrates together, whereas too high quantity may lead that the PSA is not flexible enough, not able to wet out on the surface and build a good contact.

The debondable solvent-borne pressure sensitive adhesive composition according to the present invention comprises a solvent to moderate its viscosity. Preferably the solvent is a mixture of two or more solvents, more preferably a mixture of three or more solvents. Preferably the solvent is selected from the group consisting of methylacetate, ethyl acetate, isobutylacetate, n-butylacetate, methanol, ethanol, isopropanol, pentanedione, hexane, heptane, toluene, acetone, and mixtures thereof.

These solvents are preferred because they maintain the viscosity of the PSA in a targeted range and help to shape the (meth)acrylate co-polymer.

In one embodiment the solvent is a mixture of two or more solvents selected from the group consisting of methylacetate, ethyl acetate, isobutylacetate, n-butylacetate, methanol, ethanol, isopropanol, pentanedione, hexane, heptane, toluene, acetone, and mixtures thereof.

In another embodiment the solvent is a mixture of three or more solvents selected from the group consisting of methylacetate, ethyl acetate, isobutylacetate, n-butylacetate, methanol, ethanol, isopropanol, pentanedione, hexane, heptane, toluene, acetone, and mixtures thereof.

Suitable commercially available solvents for use in the present invention include but are not limited to ethyl acetate from Eastman and isopropanol from Shell.

The solvent may be present in a debondable solvent-borne pressure sensitive adhesive composition according to the present invention in an amount of from 43 to 65% based on the total weight of the composition, preferably from 44 to 62%, and more preferably from 45 to 60%.

The solvents influence the viscosity of the composition, and therefore, influence the processability of the composition. If the solvent quantity is too low it may lead to too high viscosity, which may cause problems on processability, whereas too high quantity may lead to too low viscosity and adversely affect to the other properties.

Suitable commercially available (meth)acrylate co-polymers, including the solvent and the cross linker, for use in the present invention include but are not limited to: LOCTITE DURO-TAK 183A available from Henkel Corporation; DURO-TAK 195A available from Henkel Corporation; and DURO-TAK AH115 EU available from Henkel Corporation.

The debondable solvent-borne pressure sensitive adhesive composition according to the present invention may further comprise a tackifier. The tackifier helps to balance adhesive and cohesive properties of the PSA by increasing its peel and tack.

Preferably the tackifier is selected from the group consisting of aliphatic petroleum hydrocarbon resins, cycloaliphatic petroleum hydrocarbon resins, aromatic petroleum hydrocarbon resins and the hydrogenated derivatives thereof; polycyclopentadiene resins, hydrogenated polycyclopentadiene resins, aromatic modified hydrogenated polycyclopentediene resins; terpenes, aromatic terpenes, hydrogenated terpenes; polyterpenes, aromatic modified polyterpenes and terpene phenolics; copolymers of α-methylstyrene and a vinyl aromatic monomer; gum rosins, gum rosin esters, wood rosins, wood rosin esters, tall oil rosins, tall oil rosin esters and hydrogenated rosin esters; and mixtures thereof, more preferably tackifier is selected from the group consisting of glycerol ester of partially hydrogenated gum rosin, aliphatic C5 petroleum hydrocarbon resin, and mixtures thereof.

These tackifiers are preferred as they are compatible with the (meth)acrylate co-polymers, and therefore, lead to the ideal tack.

Suitable commercially available tackifiers for use in the present invention include but are not limited to Hydrogral G from company DRT and M-110 and M-120 hydrogenated C₅ and/or C₉ hydrocarbon feed stocks available from Arakawa Chemical.

The tackifier may be present in a debondable solvent-borne pressure sensitive adhesive composition according to the present invention in an amount of from 5 to 15% based on the total weight of the composition, preferably from 7 to 14%, and more preferably from 9 to 13%.

This quantity range has been found ideal for the composition according to the present invention, less than 5% may lead to inadequate tack, whereas too high quantity, more than 15% may lead too much tack and adversely affect to the other properties of the composition.

The debondable solvent-borne pressure sensitive adhesive composition according to the present invention may further comprise a stabiliser. Preferably the stabiliser is selected from the group consisting of 1,3,5-trimethyl-2,4,6-tris(3,5-ditert-butyl-4-hydroxybenzyl)benzene, pentaerythrityl tetrakis-3(3,5-ditert-butyl-4-hydroxybenzyl)propionate, n-octadecyl-3(3,5-ditert-butyl- 4-hydroxybenzyl)propionate, 4,4'-methylene bis(2,6-tert-butylphenol), 4,4'-thiobis- (6-tert-butyl-o-cresol), 2,6-tert-butylphenol, 6-(4-hydroxyphenoxy)2,4-bis(n-octyl- thio)-1,3,5-triazine, di-n-octadecyl 3,5-ditert-butyl-4-hydroxy-benzylphosphonate, 2-(n-octylthio)ethyl 3,5-di-tert-butyl-4-hydroxybenzoate and sorbitol hexa([3-(3,5- ditert-butyl-4-hydroxylphenyl)-propionate] and mixtures thereof.

The above listed stabilisers have been found to provide good protection to a (meth)acrylate co-polymers from thermal degradation.

Suitable commercially available stabilisers for use in the present invention include but are not limited to Irganox 1010 and Irganox B225 from BASF.

The stabiliser may be present in a debondable solvent-borne pressure sensitive adhesive composition according to the present invention in an amount of from 0.05 to 0.25% based on the total weight of the composition, preferably from 0.08 to 0.2%.

If the quantity of the stabiliser is less than 0,05% this may lead to inadequate stabilisation properties, whereas too high quantity may lead adversely affect to other properties of the composition.

The solvent-borne pressure sensitive adhesive compositions according to the present invention may, of course, also contain standard additives such as: polar rubbers; pigments; fillers; plasticizers; levelling agents; foam suppressing agents; and, rheology control agents. The choice of appropriate additives is limited only in that these must be compatible with the other components of the composition and cannot be deleterious to the use of the composition.

The present invention relates to a dry film formed from the debondable solvent-borne pressure sensitive adhesive composition according to the present invention.

Thickness of the dry film according to the present invention is preferably from 2µm to 150µm.

The dry film is obtained by applying the composition on a release liner, such as a silicone foil and subsequently heating it at 110°C for three minutes. During the heating process, the solvent evaporates and leaves the dry film substantially free of solvent.

By the term substantially free of solvent is meant that the dry film comprises less than 1.5% by weight of the total weight of the dry film a solvent, preferably less than 1.0%, more preferably less than 0.1%, and even more preferably less than 0.01%.

The present invention relates to a use of the debondable solvent-borne pressure sensitive adhesive composition or the dry film according to the present invention in electronic devices.

Non-limiting examples of suitable electronic devices are smart phones, tablets, computers, other handheld devices and displays.

Non-limiting examples potential uses are frame to housing (the front glass to the back glass) application, and a battery removal application.

The present invention relates to a bonded structure comprising a) a first substrate having an electrically conductive surface; and, b) a second substrate having an electrically conductive surface; wherein the debondable solvent-borne pressure sensitive adhesive composition or a dry film according to the present invention is disposed between the electrically conductive surfaces of the first and second substrates.

When the debondable solvent-borne pressure sensitive adhesive composition is disposed between the electrically conductive surfaces of the first and second substrates, it is first disposed on an electrically conductive surface of the first substrate, and dried at 110 °C for three minutes to obtain a dry pressure sensitive adhesive film. Subsequently, an electrically conductive surface of the second substrate is placed on top of the dry sensitive pressure sensitive adhesive film, followed by an application of a pressure to form a bonded structure.

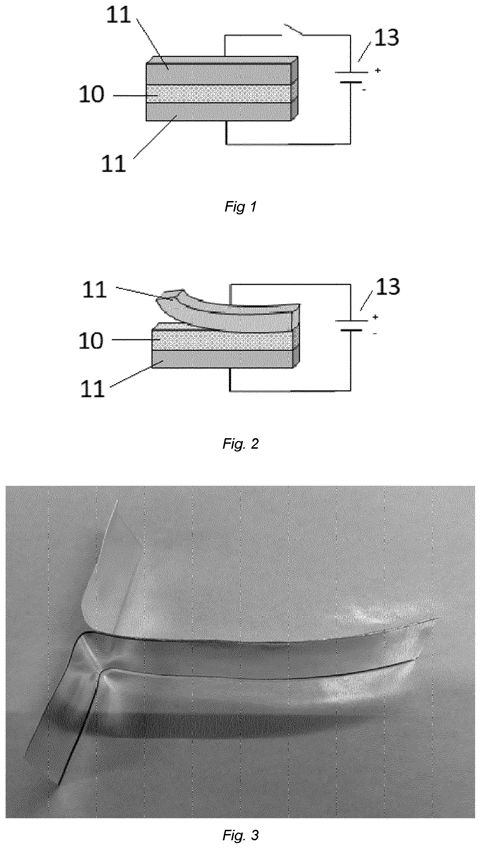

As illustrated in Figure 1 appended hereto, a bonded structure is provided in which a layer of debondable solvent-borne pressure sensitive adhesive composition (10) is disposed between two conductive substrates (11). Each layer of conductive substrate (11) is in electrical contact with an electrical power source (13) which may be a battery or an AC-driven source of direct current (DC). The positive and negative terminals of that power source (13) are shown in one fixed position, but the skilled artisan will of course recognize that the polarity of the system can be reversed.

The two conductive substrates (11) are shown in the form of a layer which may be constituted by *inter alia*: a metallic film; a metallic sheet; a metallic mesh or grid; deposited metal particles; a resinous material which is rendered conductive by virtue of conductive elements disposed therein; or, a conducting oxide layer. As exemplary conductive elements there may be mentioned silver filaments, single-walled carbon nanotubes and multi-walled carbon nanotubes. As exemplary conducting oxides there may be mentioned: doped indium oxides, such as indium tin oxide (ITO); doped zinc oxide; antimony tin oxide; cadmium stannate; and, zinc stannate. The selection of the conductive material aside, the skilled artisan will recognize that the efficacy of the debonding operation may be diminished where the conductive substrates (11) are in the form of a grid or mesh which offers limited contact with the layer of cured adhesive (10).

The present invention relates to a method of debonding said bonded structure according to the present invention, said method comprising the steps of 1) applying a voltage across both surfaces to form an anodic interface and a cathodic interface, preferably voltage of from 0.5 to 200 V is applied for from 1 second to 60 minutes; and 2) debonding the surfaces.

When an electrical voltage is applied between each conductive substrate (11), current is supplied to the debondable solvent-borne pressure sensitive adhesive composition (10) disposed there between. This induces electrochemical reactions at the interface of the substrates (11) and the adhesive composition, which electrochemical reactions are understood as oxidative at the positively charged or anodic interface and reductive at the negatively charged or cathodic interface. The reactions are considered to weaken the adhesive bond between the substrates allowing the easy removal of the debondable composition from the substrate.

As illustrated in Figure 2, the debonding occurs at the positive interface, that interface between the debondable solvent-borne pressure sensitive adhesive composition (10) and the electrically conductive surface (11) that is in electrical contact with the positive electrode. By reversing current direction prior to separation of the substrates, the adhesive bond may be weakened at both substrate interfaces.

It is however noted that the composition of the pressure sensitive adhesive layer may be moderated so that debonding occurs at either the positive or negative interface or simultaneously from both. For some embodiments a voltage applied across both surfaces so as to form an anodic interface and a cathodic interface will cause debonding to occur simultaneously at both the anodic and cathodic adhesive / substrate interfaces. In an alternative embodiment, reversed polarity may be used to simultaneously debond both substrate / adhesive interfaces if the composition does not respond at both interfaces to direct current. The current can be applied with any suitable waveform, provided that sufficient total time at each polarity is allowed for debonding to occur. Sinusoidal, rectangular and triangular waveforms might be appropriate in this regard and may be applied from a controlled voltage or a controlled current source.

Without intention to limit the present invention, it is considered that the debonding operation may be performed effectively where at least one and preferably both of the following conditions are instigated: a) an applied voltage of from 0.5 to 200 V; and, b) the voltage being applied for a duration of from 1 second to 60 minutes. Where the release of the conductive substrate from the pressure sensitive adhesive is to be facilitated by the application of a force - exerted via a weight or a spring, for instance - the potential might only need to be applied for the order of seconds. In some embodiments potential of 5V for a duration of 10 minutes is sufficient to have a debonding effect, whereas in some embodiments, potential of 3.5V for a duration of 30 minutes is sufficient.

It is desired that after the debonding, the pressure sensitive adhesive composition is solely on a first substrate or a second substrate, meaning that one of the substrates is substantially free of adhesive.

### Examples

The following chemicals were used in the examples:
Duro-Tak 195A from Henkel Corporation
Duro-Tak AH115 from Henkel Corporation
Duro-Tak 183 from Henkel Corporation
1-Butyl-3-methylimidazolium bis(trifluoromethylsulfonyl)imide (BMIM NTF) from Sigma Aldrich

### Example 1

The compositions were prepared in accordance with 1.

**Table 1**

| Ingredient | Example 1 | Example 2 | Example 3 | Compar ative example 4 | Compar ative example 5 | Compara tive example 6 |
|---|---|---|---|---|---|---|
| Duro-Tak 195A | 90% | | | 100% | | |
| Duro-Tak 183 | | 90% | | | 100% | |
| Duro-Tak AH115 | | | 90% | | | 100% |
| 1-Butyl-3-methylimidazolium bis(trifluoromethylsulfonyl) imide (BMIM NTF) | 10% | 10% | 10% | | | |

Compositions were prepared by mixing the ingredients. The composition was formed as a pressure sensitive film by applying the composition on a release liner (silicone foil) and subsequently heated at 110°C for three minutes. The prepared PSA film having thickness of 120 µm was transferred to on aluminium foil (25mm by 200mm) having thickness of about 90 µm. Second aluminium foil was pressed against the PSA film and a bonded structure were formed (Figure 2). T-peel test was carried out according to the ASTM D1876 with a separation speed of 200 mm/min and samples with 2,5 cm x 20 cm of active area, and the results are documented in table 2.

**Table 2**

| | Example 1 | Example 2 | Example 3 | Compar ative example 4 | Compar ative example 5 | Compara tive example 6 |
|---|---|---|---|---|---|---|
| T-peel [N/25mm] | 11.05 | 14 | 8 | 14.3 | 14 | 9 |
| T-peel after electrochemical delamination 20 minutes 30V | 3.45 | 3 | 0 | | | |

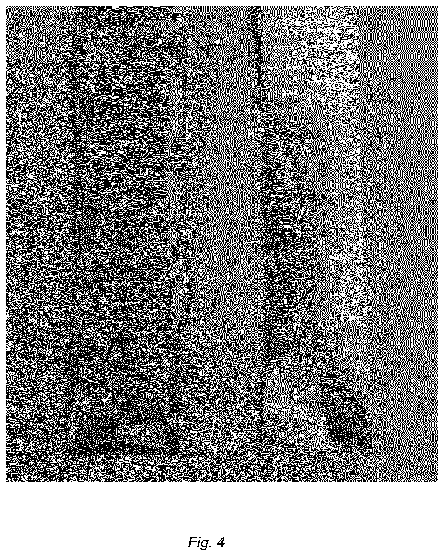

The bonded structures of examples 1, 2 and 3 came off after the electrochemical delamination as can be seen in figure 4.

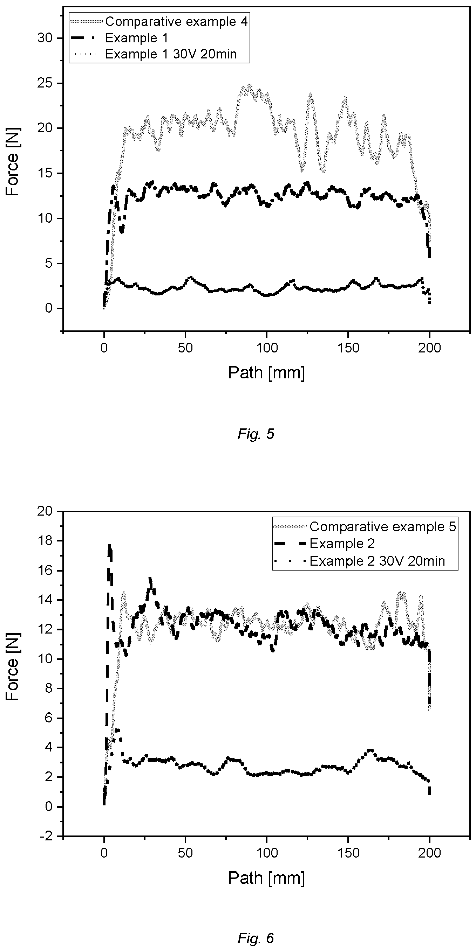

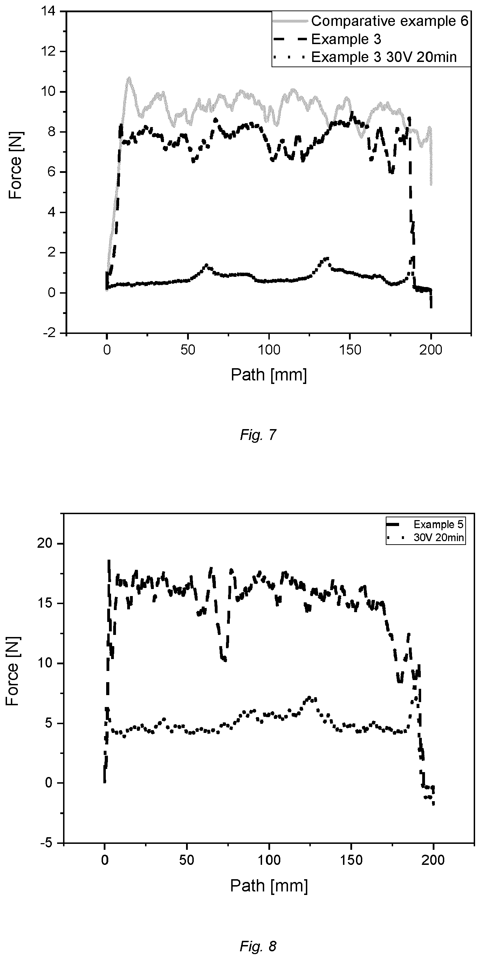

Figures 5, 6 and 7 all illustrate the measure of force during the measurement, when the aluminium foils were being pulled apart along the path in mm, and in a meantime the needed force was recorded in Newton. Figure 5 illustrates needed force to pull apart the aluminium foils adhered together with example 1 and comparative example 4. Figure 6 illustrates needed force to pull apart the aluminium foils adhered together with example 2 and comparative example 5. Figure 7 illustrates needed force to pull apart the aluminium foils adhered together with example 3 and comparative example 6.

### Example 2

Different quantities of the electrolyte were tested. The compositions were prepared in accordance with table 3.

**Table 3**

| Ingredient | Example 7 | Example 8 | Example 9 | Example 10 | Example 11 |
|---|---|---|---|---|---|
| Duro-Tak 195A | 99% | 97% | 95% | 93% | 90% |
| 1-Butyl-3-methylimidazolium bis(trifluoromethylsulfonyl) imide (BMIM NTF) | 1% | 3% | 5% | 7% | 10% |

The compositions were prepared by mixing the ingredients. The composition was formed as a pressure sensitive film by applying the composition on a release liner (silicone foil) and subsequently heated at 110°C for three minutes. The prepared PSA film having thickness of 120 µm was transferred to on aluminium foil (25mm by 200mm) having thickness of about 80 µm. Second aluminium foil was pressed against the PSA film and a bonded structure were formed (Figure 2). T-peel test was carried out according to the ASTM D1876 with a separation speed of 200 mm/min and samples with 2,5 cm x 20 cm of active area. The bonded structures of examples 7-11 came off after the electrochemical delamination as can be seen in figure 4. The results are documented in table 4.

**Table 4**

| | Example 7 | Example 8 | Example 9 | Example 10 | Example 11 |
|---|---|---|---|---|---|
| T-peel [N/25mm] | 12.6 | 14.09 | 13.25 | 12.9 | 14.3 |
| T-peel after electrochemical delamination 20 minutes 30V | 6 | 4.8 | 5.3 | 5.3 | 3.5 |

### Example 3

Stability of the PSA film formed from the composition of example 7 was tested. The results are documented in Table 7.

**Table 5**

| Test | Example 7 |
|---|---|
| 180° Peel N/25mm steel | 15.4 |
| 180° Peel N/25mm glass | 15.3 |
| 180° Peel N/25mm steel (24h) | 16.3 |
| 180° Peel N/25mm glass (24h) | 15.4 |
| Loop tack, N/25mm steel | 15 |
| Solids content (60 min, 150 °C) | 43% |
| Static shear test, 25°C, 1 kg | Over 7 days |
| SAFT test | Over 200°C |

180° Peel was measured according to FTM-1 in FINAT Technical Handbook 9th Edition.

Loop tack was measured by DIN EN 1719.

Static shear was measured according to FTM-8 in FINAT Technical Handbook 9th Edition.

Shear adhesion failure temperature (SAFT) was measured according to following: The instrument ES 07-II, commercially available from Elastocon, was used to test the hot-fail temperature of PSA compositions under shear in accordance with ASTM D4498. Each adhesive member was cut into a 25 mmx 25mm film which was then laminated on a standardized adherend by rolling a 2 kg roller back and forth two times at a rate of 10 mm/s. A weights (1kg) was attached to each member and the temperature was increased from room temperature at controlled rate (0.5°C/min) until either a temperature of 200°C is attained or the adhesive member failed.

Figure 8 illustrates needed force to pull apart the aluminium foils adhered together with example 7.

The test results exemplify a good stability of the pressure sensitive adhesive tape made from the composition according to the present invention.

## Claims

1. A debondable solvent-borne pressure sensitive adhesive composition comprising
a) a (meth)acrylate co-polymer formed from the monomers selected from the group consisting of ethyl (meth)acrylate, methyl acrylate, butyl (meth)acrylate, 2-ethylhexyl (meth)acrylate, 3-epoxypropyl (meth)acrylate, 2-hydroxyethyl (meth)acrylate, hydrogenated polybutadiene(meth)acrylate, glacial acrylic acid, vinyl acetate, and mixtures thereof;
b) an electrolyte selected from the group consisting of 1-butyl-3-methylimidazolium bis(trifluoromethylsulfonyl)imide, 1-ethyl-3-vinylimidazolium methanesulfonate, 1-dodecyl-3-methylimidazolium bis(trifluoromethylsulfonyl)imide, tributyl(ethyl) phosphonium diethyl phosphate, trihexyltetradecylphosphonium bis(trifluoromethylsulfonyl)amide and mixtures thereof;
c) a cross-linker; and
d) a solvent.

2. The debondable solvent-borne pressure sensitive adhesive composition according to claim 1, wherein the (meth)acrylate co-polymer is present from 23 to 55% based on the total weight of the composition, preferably from 25 to 40%, and more preferably from 26 to 39%.

3. The debondable solvent-borne pressure sensitive adhesive composition according to claim 1 or 2, wherein the electrolyte is present from 0.1 to 12 % based on the total weight of the composition, preferably from 0.4 to 11%, more preferably from 0.5 to 11%, and even more preferably from 0.75 to 10.75%.

4. The debondable solvent-borne pressure sensitive adhesive composition according to any of claims 1 to 3, wherein the cross linker is a complex of a metal selected from the group consisting of Al, Ti, Fe, Co, Ba, Zr, K and Zn and 1,3-dicarbonyl ligand providing organic compound, preferably the cross linker is selected from the group consisting of aluminium tris-2,4-pentanedionate, titanium diisopropoxide bis(acetylacetonate), and mixtures thereof.

5. The debondable solvent-borne pressure sensitive adhesive composition according to any of claims 1 to 4, wherein the cross linker is present from 0.01 to 1.0% based on the total weight of the composition, preferably from 0.02 to 0.75%, and more preferably from 0.03 to 0.65%.

6. The debondable solvent-borne pressure sensitive adhesive composition according to any of claims 1 to 5, wherein the solvent is a mixture of two or more solvents, preferably a mixture of three or more solvents, selected from the group consisting of methylacetate, ethyl acetate, isobutylacetate, n-butylacetate, methanol, ethanol, isopropanol, pentanedione, hexane, heptane, toluene, acetone, and mixtures thereof.

7. The debondable solvent-borne pressure sensitive adhesive composition according to any of claims 1 to 6, wherein the solvent is present from 43 to 65% based on the total weight of the composition, preferably from 44 to 62%, and more preferably from 45 to 60%.

8. The debondable solvent-borne pressure sensitive adhesive composition according to any of claims 1 to 7, further comprising a tackifier, preferably selected from the group consisting of aliphatic petroleum hydrocarbon resins, cycloaliphatic petroleum hydrocarbon resins, aromatic petroleum hydrocarbon resins and the hydrogenated derivatives thereof, polycyclopentadiene resins, hydrogenated polycyclopentadiene resins, aromatic modified hydrogenated polycyclopentediene resins; terpenes, aromatic terpenes, hydrogenated terpenes; polyterpenes, aromatic modified polyterpenes and terpene phenolics; copolymers of α-methylstyrene and a vinyl aromatic monomer; and, gum rosins, gum rosin esters, wood rosins, wood rosin esters, tall oil rosins, tall oil rosin esters and hydrogenated rosin esters and mixtures thereof, more preferably tackifier is selected from the group consisting of glycerol ester of partially hydrogenated gum rosin, aliphatic C5 petroleum hydrocarbon resin, and mixtures thereof.

9. The debondable solvent-borne pressure sensitive adhesive composition according to claim 8, wherein the tackifier is present from 5 to 15% based on the total weight of the composition more preferably from 7 to 14%, more preferably from 9 to 13%.

10. The debondable solvent-borne pressure sensitive adhesive composition according to any of claims 1 to 9, further comprising a stabiliser, preferably selected from the group consisting of 1,3,5-trimethyl-2,4,6-tris(3,5-ditert-butyl-4-hydroxybenzyl)benzene, pentaerythrityl tetrakis-3(3,5-ditert-butyl-4-hydroxybenzyl)propionate, n-octadecyl-3(3,5-ditert-butyl- 4-hydroxybenzyl)propionate, 4,4'-methylene bis(2,6-tert-butylphenol), 4,4'-thiobis- (6-tert-butyl-o-cresol), 2,6-tert-butylphenol, 6-(4-hydroxyphenoxy)2,4-bis(n-octyl- thio)-1,3,5-triazine, di-n-octadecyl 3,5-ditert-butyl-4-hydroxy-benzylphosphonate, 2-(n-octylthio)ethyl 3,5-di-tert-butyl-4-hydroxy-benzoate and sorbitol hexa([3-(3,5- ditert-butyl-4-hydroxylphenyl)-propionate] and mixtures thereof.

11. The debondable solvent-borne pressure sensitive adhesive composition according to claim 10, wherein the stabiliser is present from 0.05 to 0.25% based on the total weight of the composition more preferably from 0.08 to 0.2%.

12. A dry film formed from the debondable solvent-borne pressure sensitive adhesive composition according to any of claims 1 to 11.

13. Use of the debondable solvent-borne pressure sensitive adhesive composition according to any of claims 1 to 11 or the dry film according to claim 12 in electronic devices.

14. A bonded structure comprising
a) a first substrate having an electrically conductive surface; and,
b) a second substrate having an electrically conductive surface;
wherein the debondable solvent-borne pressure sensitive adhesive composition according to any of claims 1 to 11 or a dry film according to claim 12 is disposed between the electrically conductive surfaces of the first and second substrates.

15. A method of debonding said bonded structure according to claim 14, said method comprising the steps of:
1) applying a voltage across both surfaces to form an anodic interface and a cathodic interface, preferably voltage of from 0.5 to 200V is applied for from 1 second to 60 minutes; and
2) debonding the surfaces.
